# EUROPEAN PATENT SPECIFICATION

(11) **EP 2 471 231 B1**
(45) Date of publication and mention of the grant of the patent: **24.02.2021**
(21) Application number: 10812216.9
(22) Date of filing: 24.08.2010
(51) Int. Cl.: H04L 5/00, H04W 72/04, H04W 88/08, H04W 72/00

(54) **METHOD AND APPARATUS FOR CONFIGURING CONTROL CHANNEL IN OFDM SYSTEM**
VERFAHREN UND VORRICHTUNG ZUR KONFIGURATION VON STEUERKANÄLEN IN EINEM OFDM-SYSTEM
PROCÉDÉ ET APPAREIL DE CONFIGURATION DE CANAUX DE COMMANDE DANS DES SYSTÈMES OFDM

(30) Priority: 24.08.2009 KR 20090078161; 26.10.2009 KR 20090101834; 12.01.2010 KR 20100002532; 03.05.2010 KR 20100041594; 13.08.2010 KR 20100078222
(43) Date of publication of application: 04.07.2012
(73) Proprietor: Samsung Electronics Co., Ltd., Suwon-si, Gyeonggi-do, 443-742 (KR)
(72) Inventor: JI, Hyoung Ju, Seoul 135-866 (KR); CHO, Joon Young, Suwon-si Gyeonggi-do 443-470 (KR); HAN, Jin Kyu, Seoul 156-772 (KR); CHOI, Seung Hoon, Suwon-si Gyeonggi-do 443-380 (KR)
(74) Representative: HGF
(86) International application number: PCT/KR2010/005610
(87) International publication number: WO 2011/025202

(56) References cited:
- EP-A2- 2 045 952
- EP-A2- 2 465 316
- WO-A1-2008/032979
- WO-A1-2008/100093
- WO-A2-2009/056943
- US-A1- 2005 190 728
- INTERDIGITAL COMMUNICATIONS ET AL: "Link-Level Performance for R-PDCCH FDM / TDM+FDM with Distributed and Localized Allocations", 3GPP DRAFT; R1-094635, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389041, [retrieved on 2009-11-03]
- 'E-UTRA DL Ll/L2 Control Channel Configurations & RE Mapping' 3GPP TSG RANI #51, [Online] 09 November 2007, JEJU, KOREA, XP050108075 Retrieved from the Internet: <URL:http://www.3gpp.org/ftp/tsg_ran/WG1_RL 1/TSGR1_51/Docs/R1-074584.zip>

## Description

### Technical Field

The present invention generally relates to wireless communications and, in particular, to a control channel configuration method and apparatus for supporting ICIC in an OFDM-based communication system.

### Background Art

Mobile communication systems have been developed to provide users with voice communication service even when on the move. The systems have evolved to expand service capability from basic voice service to the more recent high speed data service. With the diversification of services and increase in user requests for high quality services, there is a need for improved technologies to manage system resources more efficiently.

Long Term Evolution (LTE) is a next generation broadband communication technology developed by the 3rd Generation Partnership Project (3GPP). LTE is designed to provide for a downlink speed of up to 100 Mbps and is expected to be commercially launched in 2010. In order to fulfill the requirements for LTE systems, studies have been done in various aspects including minimization of the number of involved nodes in the connections and placing radio protocol as close as possible to the radio channels.

In the LTE system, an Inter-Cell-Interference-Coordination (ICIC) technique has been adopted to reduce Inter-Cell Interference (ICI). In ICIC, a cell informs its neighbor cells of the Resource Blocks (RBs) in which high power is transmitted and interference is detected at a level higher than a threshold among the RBs it uses, and thus the neighbor cell receiving the coordination information controls the transmission powers of the RBs and the transmission scheduling based on the coordination information.

EP-2045952-A2 discloses a method for allocating resources of a control channel in a mobile communication system using orthogonal frequency division multiplexing (OFDM).

WO-2009/056943-A2 discloses control channel formulation in OFDM systems. In a disclosed example, a method entails formulating control channel information for a transmitting device operating in an OFDM system in which a control channel spans n OFDM symbols.

Interdigital Communications et al: "Link-Level Performance for R-PDCCH FDM / TDM+FDM with Distributed and Localized Allocations" (3GPP draft; R1-094635) discloses link-level simulation results for the R-PDCCH DL backhaul control channel in order to assess performance when using FDM and Hybrid (TDM+FDM) R-PDCCH mapping schemes.

### Disclosure of Invention

### Technical Problem

In the current LTE system, since resource allocation is done such that the user is allocated resources in units of RBs for data channels but in units of Resource Element Groups (REGs) across the system bandwidth for control channels, it is difficult to employ ICIC for the control channels. Meanwhile, with the introduction of the LTE-Advanced (LTE-A) system which enables additional control channel configuration, there is a need to improve channel configuration in consideration of ICIC.

### Solution to Problem

In order to solve the problems in the prior art, the present invention provides a control channel configuration method and apparatus for supporting ICIC in an OFDM-based communication system that is capable of increasing control channel efficiency and system coverage. Also, the present invention provides a control channel configuration method and apparatus for supporting ICIC in an OFDM-based communication system that is capable of improving resource utilization efficiency by effectively multiplexing relay control channels.

The invention is defined and limited only by the scope of appended claims 1-11. In what follows, any reference to embodiments not falling within the scope of said claims are to be interpreted as examples useful for understanding the invention. In particular, only the embodiments relating to figure 14, number 1411, figure 15, number 1511, and figure 16, number 1603 are according to the invention.

### Advantageous Effects of Invention

The present invention allows the receiver to receive the ICIC control channel by frequency division multiplexing the data destined to the terminal which can receive the control channel with the data channels and allocated resource multiplexing with the control channel transmitted to the relay, resulting in minimization of resource waste. Also, the control channel configuration method and apparatus for supporting ICIC in an OFDM-based system according to the present invention is capable of reducing scheduling delay of the control channel for ICIC and being applied to the case where relay control channel coexists with the ICIC control channel.

### Brief Description of Drawings

The above and other objects, features and advantages of the present invention will be more apparent from the following detailed description in conjunction with the accompanying drawings, in which:

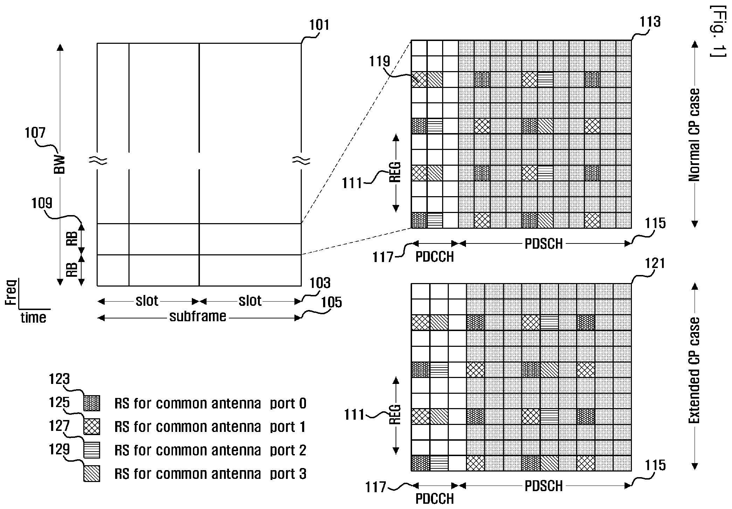

FIG. 1 is a diagram illustrating a structure of a subframe of an LTE system to which the present invention is applied;

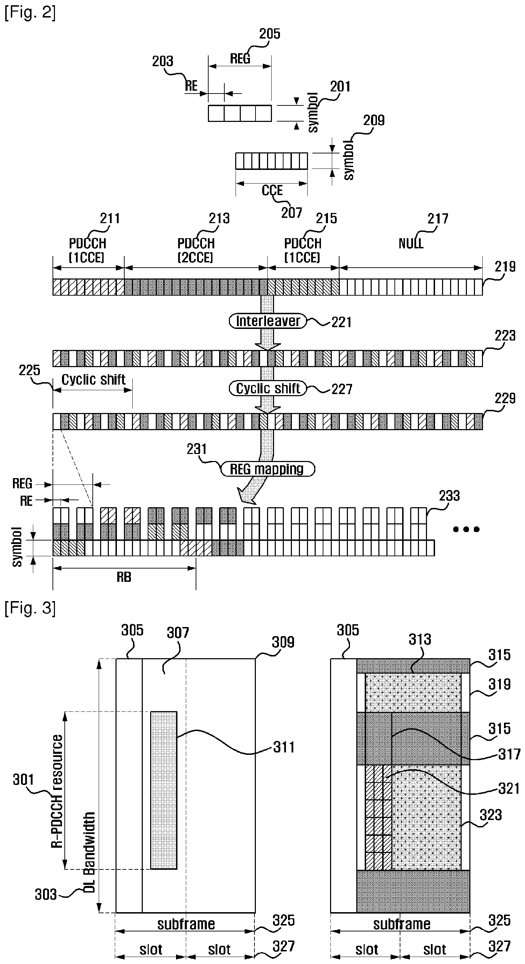

FIG. 2 is a diagram illustrating a structure of a control channel of an LTE system according to an embodiment of the present invention;
FIG. 3 is a diagram illustrating a structure of a backhaul subframe of a relay in an LTE-A system according to an embodiment of the present invention;

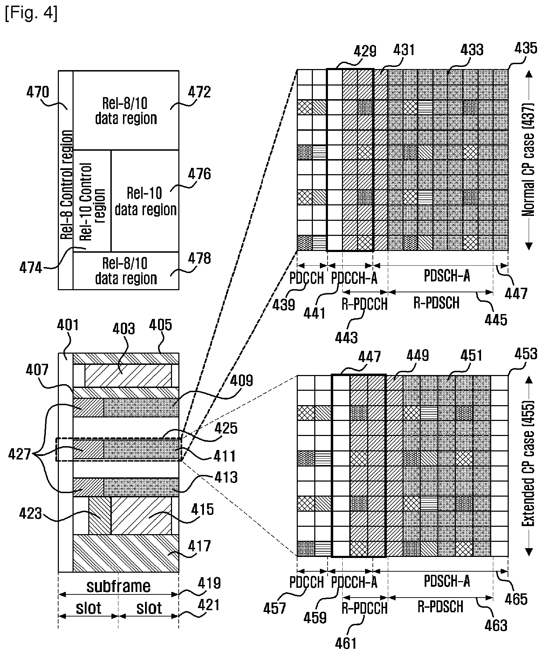

FIG. 4 is a diagram illustrating configurations of control channels in the subframe for use in the LTE system to which the present invention is applied;

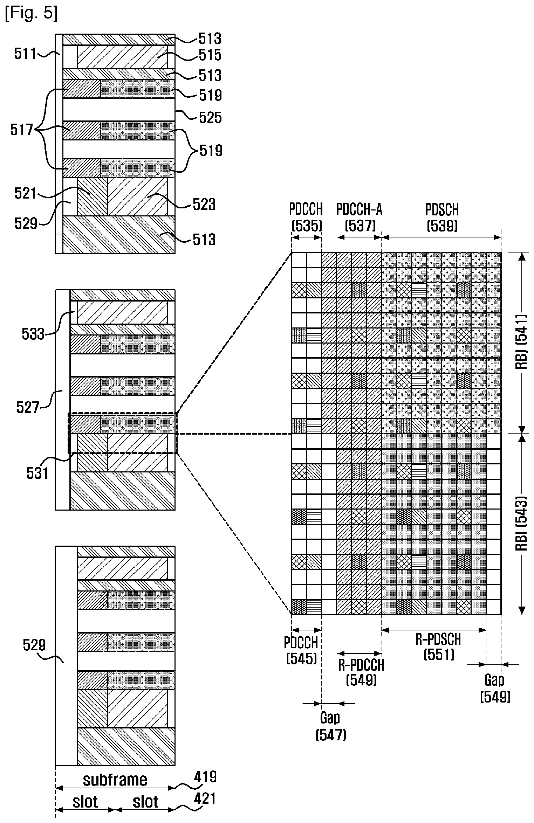

FIG. 5 is a diagram illustrating a configuration of the control channel for ICIC multiplexed in a subframe according to an embodiment of the present invention;

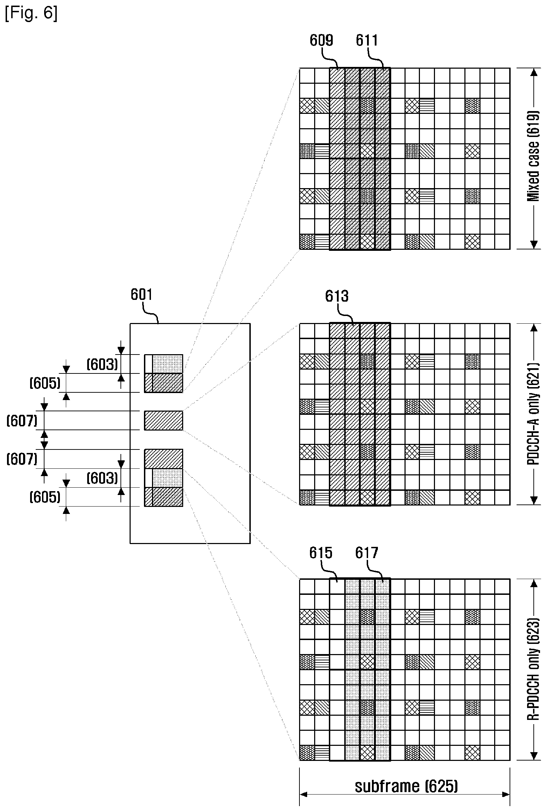

FIG. 6 is a diagram illustrating a configuration of a resource for multiplexing control channels in a subframe according to an embodiment of the present invention;

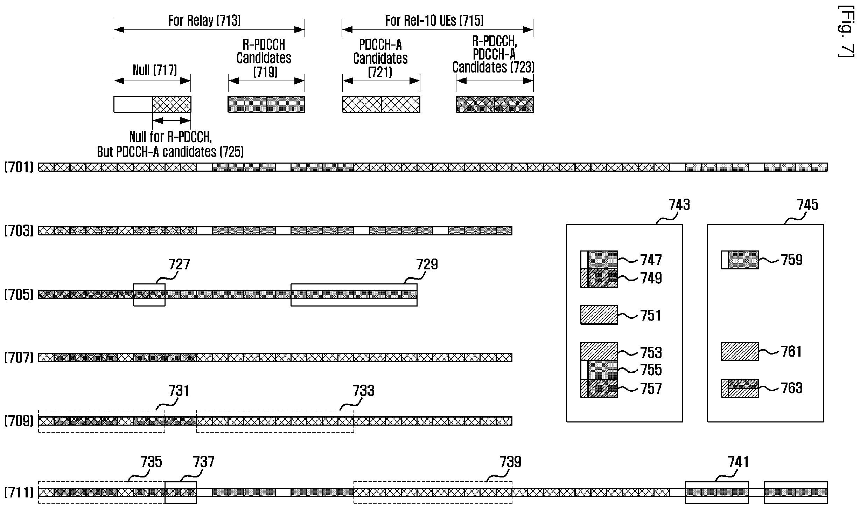

FIG. 7 is a diagram illustrating a principle of multiplexing LTE-A control channels in a control channel configuration method according to an embodiment of the present invention;

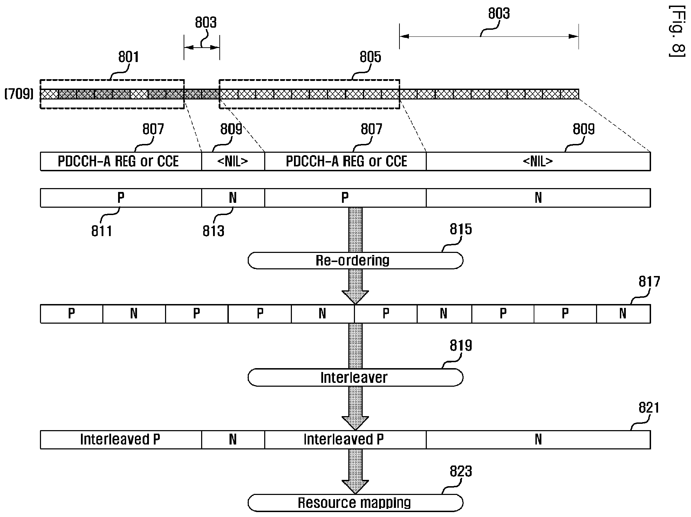

FIG. 8 is a diagram illustrating a principle of interleaving the ICIC control channels in the control channel configuration method according to an embodiment of the present invention;

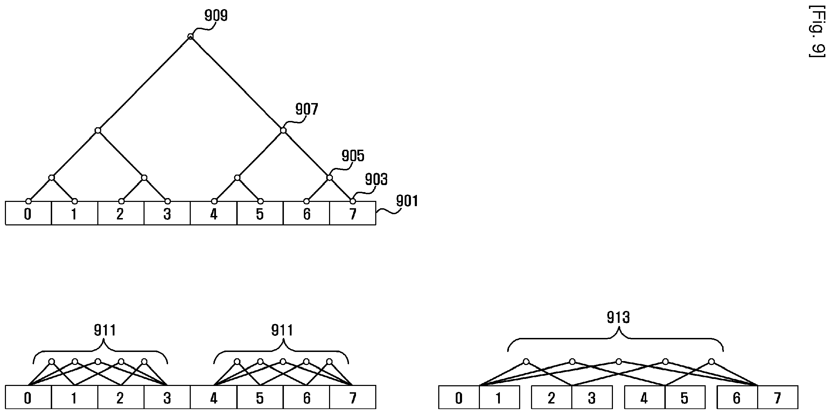

FIG. 9 is a diagram illustrating a principle of blind demodulation of the ICIC control channels in the control channel configuration method according to an embodiment of the present invention;

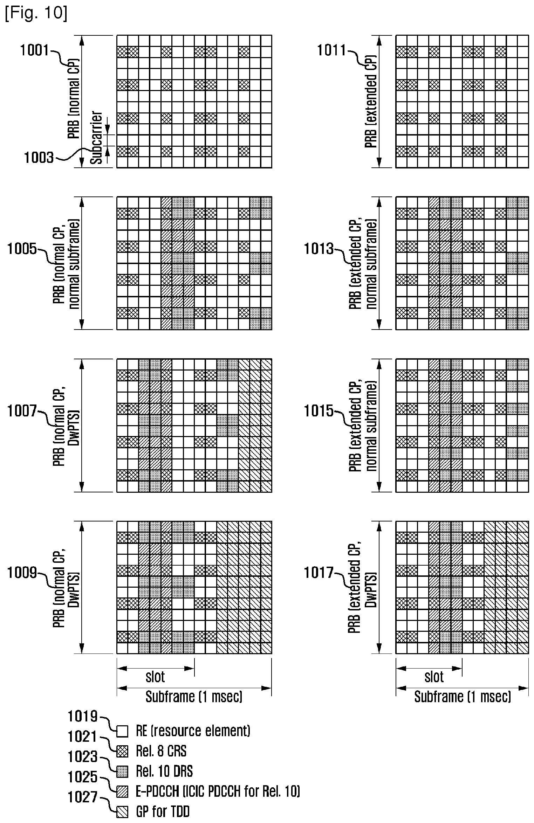

FIG. 10 is a diagram illustrating configurations of a subframe for transmitting E-PDCCH (ICIC PDCCH or R-PDCCH) using fixed resources of the subframe in the control channel configuration method according to a second embodiment of the present invention;

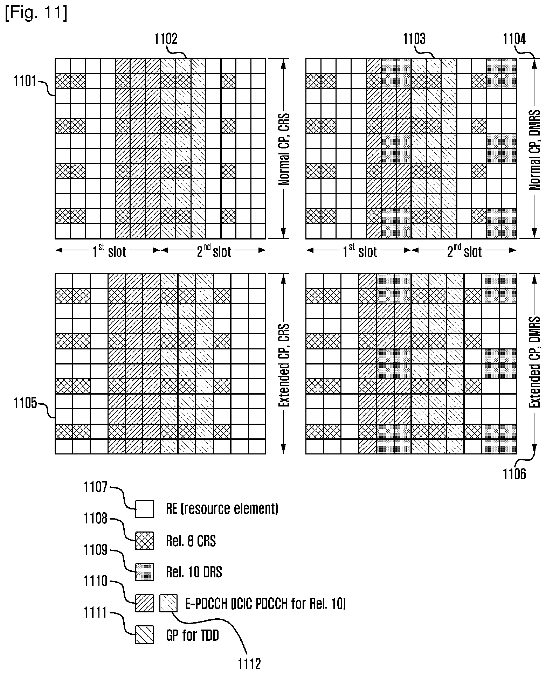

FIG. 11 is a diagram illustrating configurations of a subframe having additional E-PDCCH in the 2nd slot while using CRS and DRS in the structures of the second embodiment of FIG. 10;

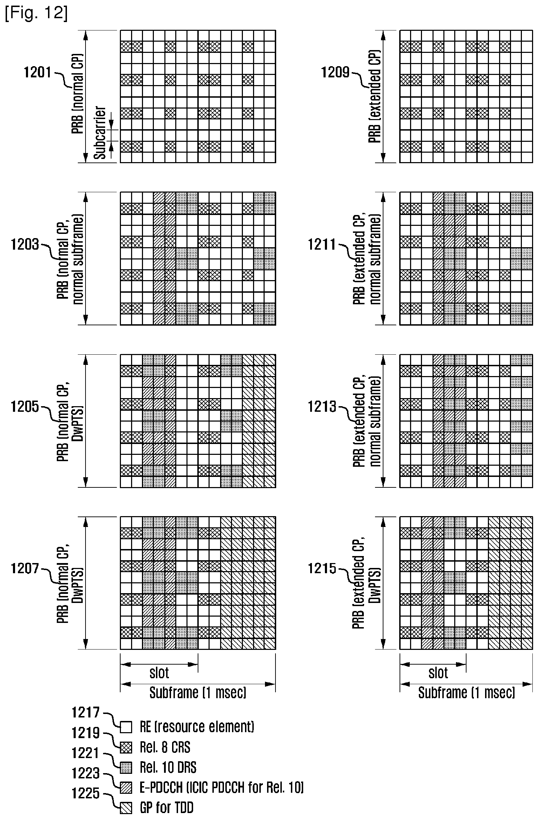

FIG. 12 is a diagram illustrating configurations of a subframe for transmitting E-PDCCH using fixed resources of the subframe in the control channel configuration method according to a third embodiment of the present invention;

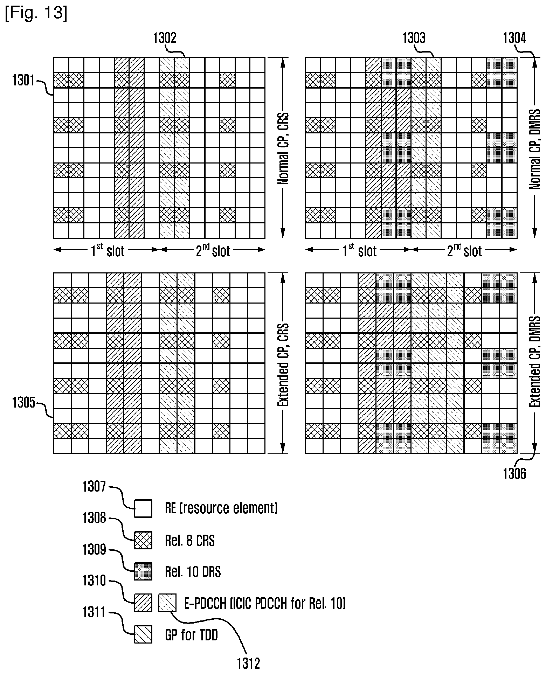

FIG. 13 is a diagram illustrating configurations of a subframe having additional E-PDCCH resource region in a 2nd slot with CRS and DRS in the structures of the third embodiment of FIG. 12;

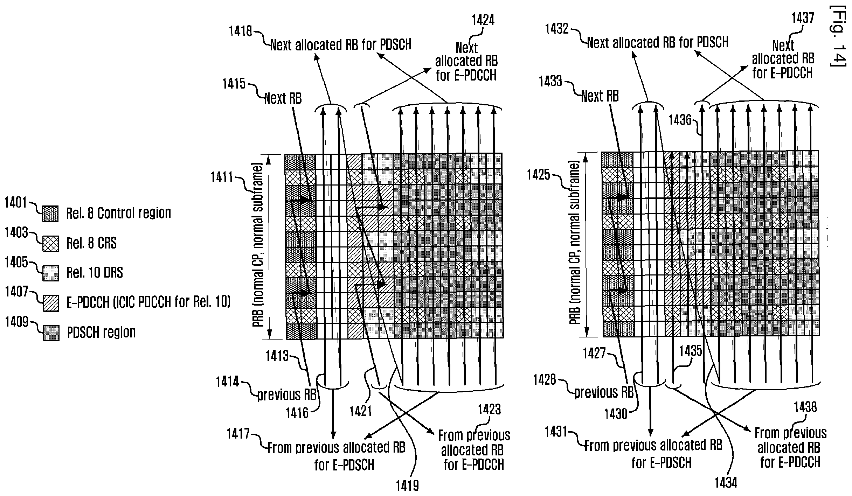

FIG. 14 is a diagram illustrating a principle of E-PDCCH resource mapping in the control channel configuration method according to an embodiment of the present invention;

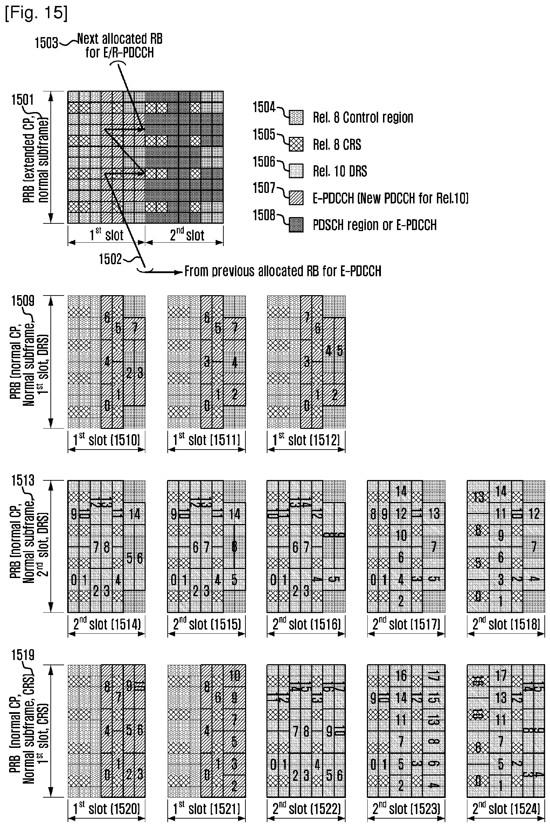

FIG. 15 is a diagram illustrating configurations of slots of a subframe for supporting a time-domain allocation scheme in the control channel configuration method according to an embodiment of the present invention;

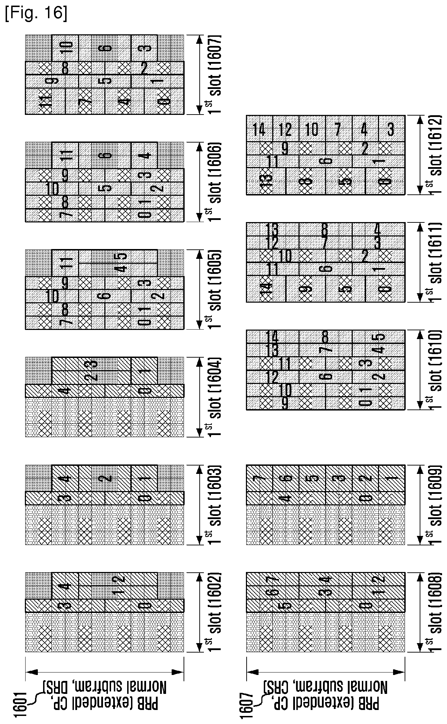

FIG. 16 is a diagram illustrating configurations of a first slot of the extended CP subframe structure in the control channel configuration method according to an embodiment of the present invention;

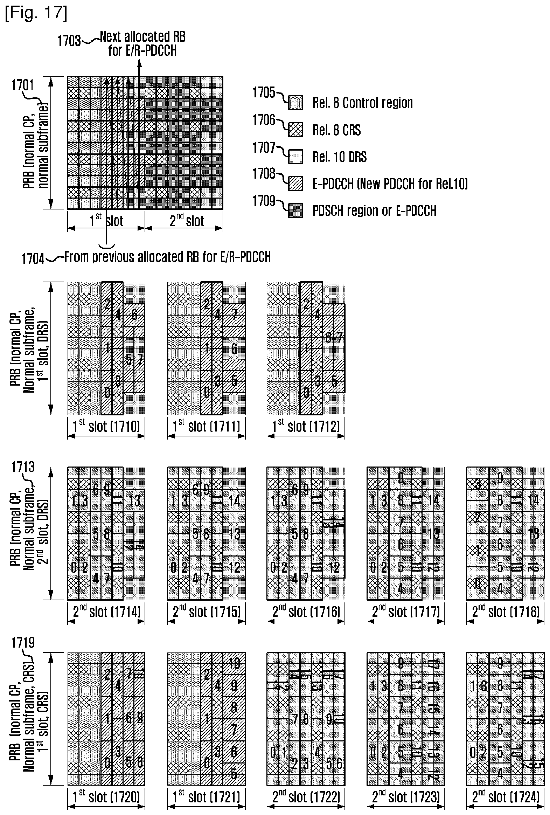

FIG. 17 is a diagram illustrating configurations of slots of a normal CP subframe structure in the control channel configuration method according to an embodiment of the present invention;

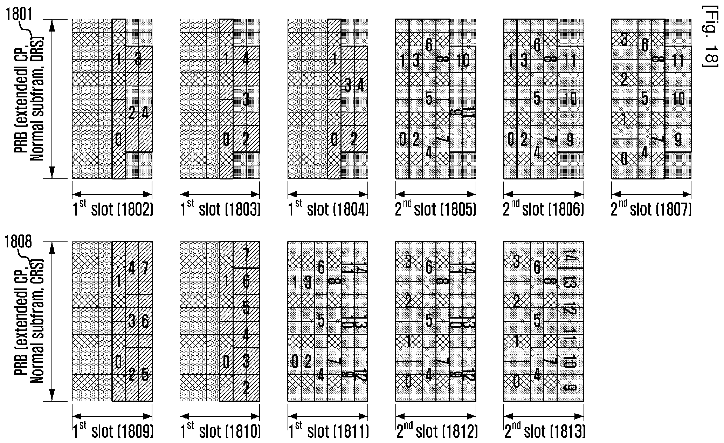

FIG. 18 is a diagram illustrating configurations of the slot of the normal CP subframe structure in the control channel configuration method according to an embodiment of the present invention;

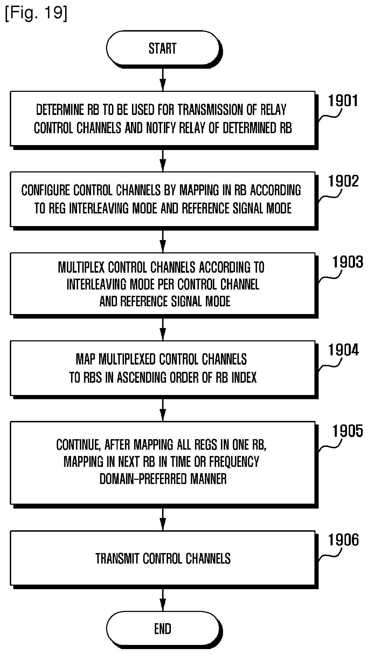

FIG. 19 is a flowchart illustrating a method for transmitting control channels according to an embodiment of the present invention;

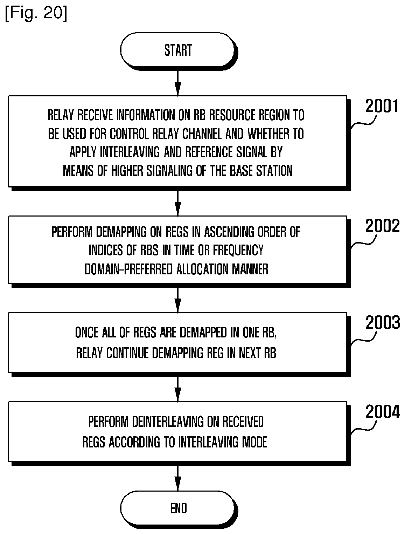

FIG. 20 is a flowchart illustrating a method for receiving control channels according to an embodiment of the present invention;

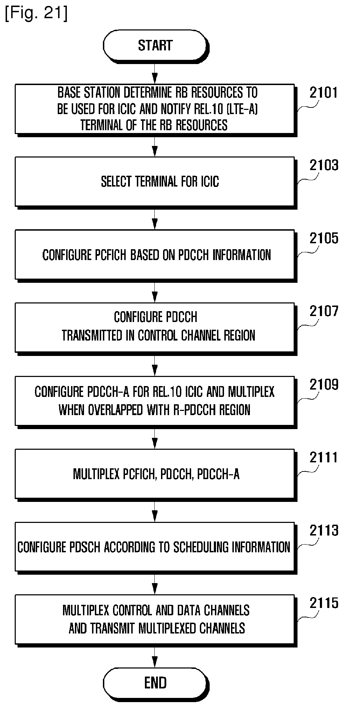

FIG. 21 is a flowchart illustrating a method for transmitting control channels according to another embodiment of the present invention;

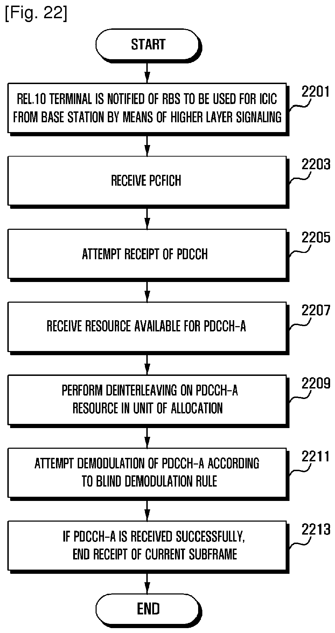

FIG. 22 is a flowchart illustrating a method for receiving control channels according to another embodiment of the present invention;

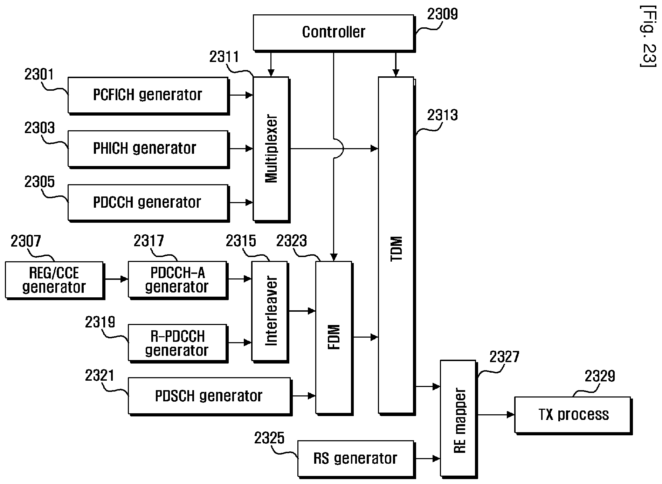

FIG. 23 is a block diagram illustrating a configuration of a base station according to an embodiment of the present invention; and

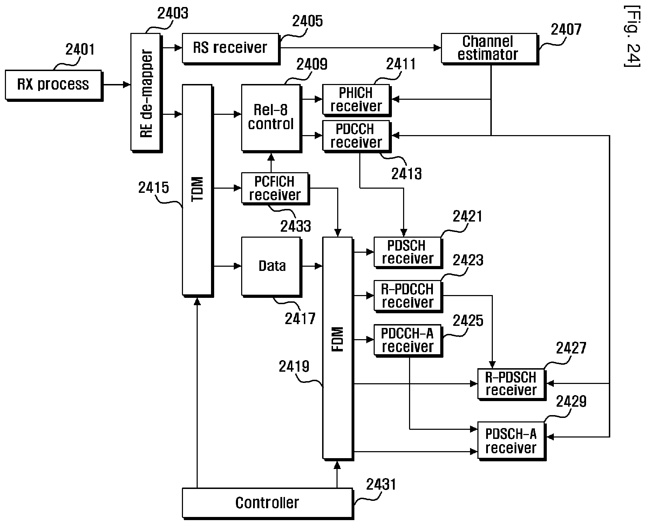

FIG. 24 is a block diagram illustrating a configuration of a user terminal according to an embodiment of the present invention.

### Mode for the Invention

Embodiments of the present invention are described in detail with reference to the accompanying drawings. The same reference numbers are used throughout the drawings to refer to the same or like parts. A detailed description of well-known functions and structures incorporated herein may be omitted to avoid obscuring the subject matter of the present invention.

Terms and words used in the specification and claims are to be regarded as concepts showing the best method of illustrating the present invention, and must be interpreted as having meanings and concepts adapted to the scope of the present invention to understand the technology of the present invention. Therefore, the embodiment described in the specification and the constructions illustrated in the drawings correspond to only a preferable embodiment, but do not represent all of the technical scope of the present invention. Accordingly, it should be understood that various equivalents and modifications can substitute them at the time of filling the present invention.

Although the description is directed to LTE and LTE-A systems in the following, the control channel configuration method and apparatus of the present invention can be applied to other types of wireless communication systems with or without modification.

In the following, the control channel related to ICIC is referred to as Enhanced-Physical Downlink Control CHannel (E-PDCCH), and the term 'E-PDCCH' is used synonymously with the term 'ICIC-PDCCH'. Also, the term 'E-PDCCH' is used synonymously with the term Relay-PDCCH or R-PDCCH. That is, E-PDCCH is a concept including control channels for relay nodes and control channels for coordinating inter-cell interferences. In an embodiment of the present invention, E-PDCCH can be allocated in the data channel region of a subframe.

In the following description, the channel and resource dedicated to the use for relay nodes are referred to as R-channel and R-resource, respectively. The control channel configuration method and apparatus of the present invention is applied identically for User Equipments (UEs) and Relay Nodes (RNs).

OFDM is a multicarrier modulation (MCM) scheme for transmitting data through multiple subcarriers in parallel. In an Orthogonal Frequency Division Multiplexing (OFDM) system, an input symbol stream is divided into several sub-symbol streams and modulated into multiple orthogonal subcarriers for transmission.

The origins of OFDM started in the late 1950's with the Frequency Division Multiplexing (FDM) for military applications. OFDM using orthogonal overlapping multiple subcarriers was developed in 1970's but was limited in wide spread used due to the difficult of implementing orthogonal modulations between multiple carriers. With the introduction of Discrete Fourier Transform (DFT) for implementation of the generation and reception of OFDM signals, by Weinstein, in 1971, OFDM technology has been developing rapidly. Additionally, the introduction of a guard interval at the start of each symbol and use of a Cyclic Prefix (CP) overcomes the negative effects caused by multipath signals and delay spread.

Owing to such technical advances, the OFDM technology is applied in various digital communications fields such as Digital Audio Broadcasting (DAB), Digital Video Broadcasting (DVB), Wireless Local Area Network (WLAN), and Wireless Asynchronous Transfer Mode (WATM). That is, the implementation of OFDM could be accomplished by reducing implementation complexity with the introduction of various digital signal processing technologies such as Fast Fourier Transform (FFT) and Inverse Fast Fourier Transform (IFFT).

OFDM is similar to Frequency Division Multiplexing (FDM) but much more spectrally efficient for achieving high speed data transmission by overlapping multiple subcarriers orthogonally. Due to the spectral efficiency and robustness to the multipath fading, OFDM has been considered as a prominent solution for broadband data communication systems.

Other advantages of OFDM are to control Inter-symbol Interference (ISI) using the guard interval and reduce the complexity of an equalizer in view of hardware as well as spectral efficiency and robustness to the frequency selective fading and multipath fading. OFDM is also robust to impulse noises so as to be employed in various communication systems.

In wireless communications, high-speed, high-quality data services are generally hindered by the channel environment. In wireless communications, the channel environment suffers from frequent changes not only due to Additive White Gaussian Noise (AWGN) but also power variation of received signals, caused by a fading phenomenon, shadowing, a Doppler effect due to movement of a terminal and a frequent change in a velocity of the terminal, interference by other users or multipath signals, etc. Therefore, in order to support high-speed, high-quality data services in wireless communication, there is a need to efficiently overcome the above factors.

In OFDM, modulation signals are located in the two-dimensional time-frequency resources. Resources on the time domain are divided into different OFDM symbols, and are orthogonal with each other. Resources on the frequency domain are divided into different tones, and are also orthogonal with each other. That is, the OFDM scheme defines one minimum unit resource by designating a particular OFDM symbol on the time domain and a particular tone on the frequency domain, and the unit resource is called a Resource Element (RE). Since different REs are orthogonal with each other, signals transmitted on different REs can be received without causing interference with each other.

A physical channel is a channel defined on the physical layer for transmitting modulation symbols obtained by modulating one or more coded bit sequences. In an Orthogonal Frequency Division Multiple Access (OFDMA) system, a plurality of physical channels can be transmitted depending on the usage of the information sequence or receiver. The transmitter and receiver negotiate the RE on which a physical channel is transmitted, and this process is called mapping.

The LTE system is a communication system which uses OFDM in the downlink and Single Carrier-Frequency Division Multiple Access (SC-FDMA) in the uplink. The LTE-A system is an advanced LTE system supporting wider bandwidth by aggregating two or more LTE component carriers.

FIG. 1 is a diagram illustrating a structure of a subframe of the LTE system to which the present invention is applied. The subframe depicted in FIG. 1 is designed to be supported in the LTE-A system.

Referring to FIG. 1, the LTE system bandwidth 107 is split into a plurality of contiguous Resource Blocks (RBs), and an RB 109 (113 as well) as a block with 12 contiguous tones in the frequency domain and 14 contiguous OFDM symbols (as denoted by reference number 113) or 12 contiguous OFDM symbols (as denoted by reference number 121). One subframe 105 is 1 ms and consists of two slots 103. The subframe composed of 14 OFDM symbols is in normal Cyclic Prefix (CP) subframe structure, and the subframe composed of 12 OFDM symbols is an extended CP subframe structure. The resource blocks each consists of 14 frequency tones are covering the entire bandwidth (BW) 107 for a subframe.

Reference Signals (RSs) 123, 125, 127, and 129 are the signals transmitted by the base station in order for the user terminals to estimate channels and correspond to respective antenna ports 0, 1, 2, and 3. If a number of antenna ports are greater than 1, this means a multi-antenna transmission scheme is used. The RSs are arranged at fixed positions of the RB in a cell-specific manner at regular intervals in the frequency domain. That is, the RSs for the same antenna port are located on every 6th RB, and the reason why the absolute positions of the RSs are determined differently per cell is to avoid collision between the RSs of the different cells. The number of RSs differs according to the antenna port. For the antenna ports 0 and 1, a total of 8 RSs exist in a single RB or subframe, while for the antenna ports 2 and 3, a total of 4 RSs exist in a single RB or subframe. Accordingly, when using 4 antenna ports, the channel estimation accuracy with the antenna ports 2 and 3 is less reliable than that with the antenna ports 0 and 1.

There are two types of RSs: Common RS (CRS) and Dedicated RS (DRS). CRS is the reference signal transmitted at fixed positions such that all of the user terminals can receive the CRS within the cell. DRS is the reference signal transmitted in the resource allocated to a specific user terminal such that only the user terminal scheduled in the corresponding resource can use the DRS for channel estimation.

Meanwhile, the control channel signal is placed in the beginning of every subframe. In FIG. 1, reference number 117 denotes the control channel region. The control channel signal can be transmitted across L OFDM symbols placed in the beginning of the subframe, and L can have the value of 1, 2, or 3. FIG. 1 is depicted under the assumption that the control channel region is composed of 3 OFDM symbols (L=3). In the case where the amount of control information is small such that one OFDM symbol is enough for transmitting the control information, only one OFDM symbol in the beginning of the subframe is used to transmit the control information (L=1), and the remaining 13 OFDM symbols are used to transmit data. The value L is used as the basic information for demapping at the receiver and thus, if it is not received, the receiver cannot recover the control channel. In Multimedia Broadcast over a Single Frequency Network (MBSFN), L is fixed to the value of 2. Here, the MBSFN is a channel for transmitting broadcast information. If the subframe is indicated as the broadcast subframe, the LTE terminal receives the signal in the control channel region but not in the data region of the subframe. However, the LTE-A terminal can be configured to receive the signal in the data region of the MBSFN subframe for other purposes.

The reason why the control signaling is transmitted in the beginning of the subframe is for the terminal to determine whether the subframe is intended for itself and, as a consequence, to determine whether to receive the data channel. If it is determined that there is no data channel destined to the terminal, the terminal can enter the idle mode and save power.

The LTE standard specifies three downlink control channels: Physical Control Format Indicator CHannel (PCFICH), Physical Hybrid ARQ Indicator CHannel (PHICH), and Packet Data Control CHannel (PDCCH); and these control channels are transmitted in units of Resource Element Groups (REGs) 111 within the control region 117.

The PCFICH is the physical channel for transmitting the Control Channel Format Indicator (CCFI) to the terminal. CCFI is 2-bit long and indicates the number of symbols occupying the control region in a subframe "L". Since a terminal can recognize the number of symbols of the control region based on the CCFI, the PCFICH must be the first channel to be received in a subframe except when the downlink resource is allocated persistently. Since it is impossible to know the value of L before receiving the PCFICH, the PCFICH is always mapped to the first OFDM symbol of each subframe. The PCFICH is in 4 resource groups formed by equally separating 16 subcarriers in frequency.

The PHICH is the physical channel for transmitting downlink ACK/NACKs. PHICH is received by the terminal which is transmitting data in the uplink. Accordingly, the number of PHICHs is in proportion to the number of terminals that are transmitting in the uplink. PHICH is transmitted in the first OFDM symbol (LPHICH=1) or three OFDM symbols (LPHICH=3) of the control region. The PHICH configuration information (number of channel, LPHICH) is broadcast through the Primary Broadcast CHannel (PBCH) such that all of the terminals acquire the information at their initial connection to the cell. Also, PHICH is transmitted at a predetermined position per cell like the PCFICH such that the terminals can acquire the PHICH configuration information by receiving the PBCH when the terminal connects to the cell regardless of other control channel information.

The PDCCH 117 is the physical channel for transmitting data channel allocation information or power control information. The PDCCH can be transmitted with different channel coding rates according to the channel condition of the target terminal. Since Quadrature Phase Shift Keying (QPSK) is always used for PDCCH transmissions, changing channel coding rate requires a change of the resource amount for a PDCCH. When the channel condition of the terminal is good, a high channel coding rate is used to save the resource. In contrast, when the channel condition of the terminal is bad, a low channel coding rate is used to increase reception probability at the terminal even at the cost of large amounts of resources. The resource amount for each PDCCH is determined in units of Control Channel Elements (CCEs). Each CCE is composed of 5 Resource Element Groups (REG) 111. In order to secure diversity, the REGs of the PDCCH are arranged in the control region after interleaving has been performed.

In order to multiplex several ACK/NACK signals, a Code Domain Multiplexing (CDM) technique is applied for the PHICH. In a single REG, 8 PHICH signals are multiplexed into 4 real number parts and 4 imaginary number parts by means of the CDM technique and repeated as many times as NPHICH so as to be distributed in the frequency domain to obtain frequency diversity gain. By using NPHICH REG, it is possible to form the 8 or less PHICH signals. In order to form more than 8 PHICH signals, it is necessary to use other NPHICH REG.

After allocating resources for the PCFICH and PHICH, a scheduler determines the value of L, maps the physical channels to the REG 111 of the allocated control region 117 based on the value of L, and performs interleaving to obtain frequency diversity gain. The interleaving is performed on the total REG 111 of the subframe 101 determined by the value of L in units of REGs in the control region 117. The output of the interleaver in the control region 117 is capable of preventing Inter-Cell Interference (ICI) caused by using the same interleaver for the cells and obtaining the diversity gain by distributing the REGs 111 of the control region 117 across one or more symbols. Also, it is guaranteed that the REGs 111 forming the same control channel are distributed uniformly across the symbols per control channel.

Recently, research is being conducted on the LTE-A as an advanced LTE system. Particularly, the research is focused on the extension of the coverage with relays which remove shadow areas in the cell and wireless backhaul for connecting the base stations with relays which operates in the same manner as the base station.

FIG. 2 is a diagram illustrating a structure of a control channel of the LTE system according to an embodiment of the present invention. In the LTE system, a control channel consists of multiple Resource Element Groups (REGs). Each REG contains four contiguous Resource Elements (REs) 203 excluding those mapped to RSs. The REG is used as a resource allocation unit and a multiplexing unit. The control channel is formatted based on the number of Control Channel Elements (CCEs), and each CCE consists of 9 REGs. The CCE is a basic unit for transmitting a PDCCH carrying scheduling information among control channels. The PDCCHs are transmitted over radio resources that are shared between several terminals, and this is known as aggregation. When the PDCCHs are aggregated in a single CCE, it is expressed that the PDCCHs are aggregated at aggregation level 1. Also, the aggregation of the PDCCHs in 8 CCEs is expressed in such a manner that the PDCCHs are aggregated at aggregation level 8.

In FIG. 1, reference number 211 denotes a PDCCH mapped to a single CCE at aggregation level 1, and reference number 213 denotes a PDCCH mapped to two CCEs at aggregation level 2. Once the aggregation of each PDCCH is determined according to the channel condition of the corresponding terminal, the PDCCHs are arranged as denoted by reference number 219.

Since the total amount of the resources for the PDCCHs is determined by the value L, the remaining resources after mapping the PDCCHs becomes idle. Afterward, the base station performs interleaving on the PDCCHs in units of REGs and then performs a cyclic shift based on the individual cell IDs. Next, the base station maps third control channels to the resources in units of REGs in the time domain first. Accordingly, the PDCCHs are transmitted in a distributed manner across the control channel region. At this time, the null resource 217 is also distributed across the entire control channel region.

FIG. 3 is a diagram illustrating a structure of a backhaul subframe of a relay in the LTE-A system according to an embodiment of the present invention.

The relay control channel, which is employed in the LTE-A system, cannot be systematically multiplexed with PDCCHs, i.e. conventional control channels. Accordingly, the relay control channel is transmitted following the conventional PDCCHs in the time domain and are multiplexed with conventional data channels in the frequency domain. Referring to FIG. 3, reference number 305 denotes the control channel region in which the base station transmits the control channels for scheduling the user terminals within its cell. The relays cannot receive the payload in the control channel region in which the user terminal scheduling information is carried. Reference number 311 denotes a resource region defined for the control channel transmitted to the relay nodes. In this region, the relay is informed by higher layer signaling. The base station notifies the relay of the amount of resources allocated for the control channel, and this means that relay does not assumed all the allocated resources can be used for transmitting the control channel, actual utilized resources can be equal or less then total allocated resources for carrying the control. Actually, the resource region 311 can be used partially for transmitting control channel. The resource region can be fully used to carry the control channels as denoted by reference number 321. Reference number 323 denotes a region carrying the data channels destined to the relays. The data channels destined to the relay nodes can be transmitted after the symbols allocated for the relay control channels. In the case where the resource is lacking in the relay data region, addition resources can be allocated as denoted by reference number 313. Reference number 315 denotes the data channels destined to the user terminals within the cell. It is considered that the base station scheduler allocates resources inside and outside of the control channel region according to the positions of the user terminal scheduling information and the relay control channel and multiplexes the relay control channel in the frequency domain. In this case, the transmission of the relay control channel has to be recognized as an RB region in order to allocate the remaining resources to the user terminals as denoted by reference number 317.

In the LTE system, the ICIC technique is used for the base stations to control inter-cell interferences by exchanging resource allocation information. Each base station notifies its neighbor base stations of the information on the RBs in which high power is transmitted and interference is detected at a level higher than a threshold among the RBs it uses, and thus the neighbor base station receiving the coordination information controls the transmission powers of the RBs and performs transmission scheduling based on the coordination information.

In the current LTE system, since the resource allocation is done such that the user is allocated resources in units of RBs for data channels but in units of REGs across the system bandwidth for control channels, it is difficult to employ the ICIC for the control channels. In the case of the LTE-A system, however, additional control channel configuration is allowed and thus there is room for improvement of resource efficiency by designing control channels in consideration of the ICIC.

FIG. 4 is a diagram illustrating configurations of control channels in the subframe for used in the LTE system to which the present invention is applied.

Reference number 470 denotes the control region in which the control channels are transmitted. In this control channel region, rel-10 control channel that is not used in ICIC can be transmitted along with the rel-8 control channel. However, the control channel destined to the relay, although it is rel-10 control channel, cannot be transmitted in the control region, due to the structural limitations of the system. Reference number 474 denotes the region in which the rel-10 control channel is transmitted. In the rel-10 control channel region, the rel-10 control channel for ICIC and control channel for relay transmission can be transmitted. Reference number 476 denotes the region in which the rel-10 data channels are transmitted, when RBs following the control region is used for the ICIC control channel, and the relay data channel, when the RBs following the control region are used for the relay control channel. Reference numbers 472 and 478 denote the region in which the data channels of the user terminals and relays within the cell.

The part 405 in FIG. 4 shows the detailed configuration of the control channels in a subframe according to an embodiment of the present invention. In the following description, it is assumed that the region 474 is allowed to transmit both the rel-10 control channel for ICIC and the control channel for relay transmission. In the case where the RBs allocated for ICIC is notified by higher layer signaling, the rel-10 control channel for ICIC is transmitted in the region 427, and the data channel is transmitted in the regions 409, 411, and 413. In the relay control channel, the relay data channel is transmitted in the region 415 and, if the resources are not enough, additional resources are allocated as denoted by reference number 403. The data channels destined to other user terminals are scheduled in the remaining resource region as denoted by reference number 407 and 417.

Reference numbers 437 and 455 denotes resource blocks for respective normal and extended CP cases in which the ICIC control channel is configured according to an embodiment of the present invention. The part 437 of FIG. 4 shows the resource block in a normal CP subframe structure, and the part 455 of FIG. 4 shows the resource block in the extended CP subframe structure. Each of the resource blocks 437 and 455 includes the region in which the relay control channel is transmitted. This is because the case where the position of the relay control channel is overlapped with the LTE-A control channel region for ICIC must be considered.

Reference numbers 429 and 447 denote the LTE-A control channel region for ICIC occupied when L of the PCFICH used in the current subframe is 2, and 3 symbols are used for transmitting the LTE-A control channel. The start and end points of the resource occupied by the LTE-A region can be determined in various methods:
Example 1) start point: L+1, end point: R-PDCCH-allocated symbol
Example 2) start point: L+1, end point: L' (L' is fixed value determined by system)
Example 3) start point: L+1, end point: L+a (a is a fixed value determined by system).

Although the description is made using Example 1), the present invention can be implemented with other cases including Example 2) and Example 3).

FIG. 5 is a diagram illustrating a configuration of the control channel for ICIC multiplexed in a subframe according to an embodiment of the present invention. Particularly in FIG. 5, the variation of the control channel amount is according to the value of the PDCCH (1, 2, or 3). The region 521 in which the relay control channel is transmitted starts from a specific symbol regardless of the PCFICH, but the ICIC control channel starts from the position where the PDCCH ends and, if L=1, its size is greater than the resource region available for transmission. In the case where the system uses a structure designed for maximizing the transmission efficiency of the ICIC-PDCCH, L has a fixed value of 1, and the ICIC-PDCCH or R-PDCCH can be configured to start from the second symbol and end at the end of the subframe, or first slot, or at a certain symbol.

In this case, the system fixes the PHICH duration of a corresponding carrier to 1 and transmits the control channels including the PHICH in the first OFDM symbol of the subframe, and this is advantageous to minimize the region occupied by the transmission of a new control channel. In this case, the value L does not change dynamically in every subframe, unlike the conventional method.

FIG. 6 is a diagram illustrating a configuration of resources for multiplexing control channels in a subframe according to an embodiment of the present invention. Particularly in FIG. 6, the subframe includes the control channel transmitted to the relay and the control channel transmitted for ICIC. FIG. 6 shows the case where the RB resource used for transmitting the relay control channel and the RB resource used for ICIC are partially overlapped.

Referring to part 601 of FIG. 6, reference number 603 denotes a resource region in which only the relay control channel can be transmitted, and reference number 605 denotes a resource region in which both the relay control channel and ICIC control channel can be transmitted. Reference number 607 denotes a resource region in which only the ICIC control channel can be transmitted.

The resource region 605 is depicted in an enlarged form as denoted by reference number 619 and is referred to as a mixed case in which both the relay control channel and ICIC control channel can be transmitted. Although it is depicted in FIG. 6 that the resource allocation unit of the control channel consists of 6 REs, the resource allocation unit can be structured with N REs. In the mixed case example 619, the ICIC control channel can be transmitted in the 3rd to 6th symbols, and the relay control channel can be transmitted in the 4th to 6th symbols. Accordingly, the region 609 can be used only to transmit the ICIC control channel, and the region 611 can be used to transmit both the relay control channel and ICIC control channel. In the case of the resource region 607 depicted in an enlarged from as denoted by reference number 621, the PDCCH-A can be transmitted at any position in the entire region. In the case of the resource region 603 depicted in an enlarged from as denoted by reference number 623, the relay control channel can be transmitted in the region 617 while the region 615 must be empty. As aforementioned, since the RB is structured in different configurations depending on the control channel carried thereon, there is a need to arrange the channels at accurate positions and employ an efficient control channel multiplexing method, such as shown in FIG. 7.

FIG. 7 is a diagram illustrating a principle of multiplexing LTE-A control channels in the control channel configuration method according to an embodiment of the present invention.

Referring to FIG. 7, the resource 713 for use in relay transmission can include two different types of resources: null resource region 717 which is barred from being used and R-PDCCH region 719 which can be used to transmit the control channel. There can be the resource 725 in which the PDCCH-A can be transmitted but not the R-PDCCH in the null resource region 717.

The resource 715 can include the region 721 for transmitting the PDCCH-A and the region 723 for transmitting the R-PDCCH as well as the PDCCH-A. The transmission resource of the entire LTE-A control channel can be arranged one-dimensionally as denoted by reference number 701. In this region, the base station must allocate the relay control channel and the ICIC control channel in the predetermined positions, and the resource allocation for the control channels are done in units of RBs. This is for allocating the remaining resources for use in transmission of the data channel. However, the relay does not know the information on the resource region used for ICIC, and the user terminal involved in ICIC does not know the information on the resource region used for the relay control channel. Accordingly, the resource mapping has to be done under the assumption that the aforementioned information is not transmitted to the user terminals.

Reference number 703 denotes the resource arrangement available for transmission of the relay control channel. In order to allocate the resources in units of RBs, it is preferred that the base station first maps relay control channels to the relay control channel region in units of RBs as denoted by reference number 729 and then maps, if remaining resources are smaller than one RB in size, to the mixed region in which the ICIC control channel region is overlapped as denoted by reference number 727.

Reference number 707 denotes the resource arrangement available for transmission of the ICIC control channel. For the same region, it is preferred that the base station maps the ICIC control channel to the dedicated ICIC control channel region in units of RBs as denoted by reference number 733 and then, if the remaining resources are smaller than one RB in size, to the mixed region as denoted by reference number 731. In this arrangement, the first RB includes both the ICIC control channel and relay control channel as denoted by reference number 763 (see also the part denoted by reference numbers 735 and 737), the second RB includes no control channel, the third RB includes only the ICIC control channel, the fourth and fifth RB include no control channel, and the sixth RB includes only the relay control channel as denoted by reference number 759.

FIG. 8 is a diagram illustrating a principle of interleaving the ICIC control channels in the control channel configuration method according to an embodiment of the present invention. Since the user terminal does not know about the information transmitted in the data region destined for the relay, the base station must perform interleaving on the ICIC data regions after separating it from other region. However, since the resources to be interleaved includes the resources allocated for the relay, in order for the user terminal to perform blind demodulation successfully, it is preferred to use the following method.

Referring to FIG. 8, the region which is not used in the entire resource region and the region used for transmitting the relay control channel are referred to as NIL as denoted by reference number 809. In an embodiment of the present invention, the basic unit of interleaving is equal to the basic units of blind demodulation and a CCEs. Accordingly, all of the resources are arranged in unit of CCE as denoted by reference number 811 and 813. Since the NIL region 809 must be located in a specific RB after interleaving, the base station must calculate the location of the NIL region after interleaving in advance and perform reordering for placing the NIL region between the ICIC control channels as denoted by reference number 815. If the reordering result 817 passes an interleaver 819, the control channels are interleaved in the RB resource for transmission and the NIL resource is arranged in the non-used RB resource for other purposes.

The receiving party receives and deinterleaves the signal as denoted by reference number 821 so as to recover the signal 817. Since this differs from the signal 709, blind demodulation is required. In order to perform blind demodulation on the deinterleaved signal structure, it is preferred to use the following demodulation scheme.

FIG. 9 is a diagram illustrating a principle of blind decoding of the ICIC control channels in the control channel configuration method according to an embodiment of the present invention.

Referring to FIG. 9, blind decoding is performed using a tree structure as denoted by reference numbers 901 to 909. The reason why the tree structure is used is to reduce the number of blind decodings. Actually, if the blind decoding is performed on all of the cases, the implementation complexity of the user terminal becomes very high. The tree structure-based decoding has a drawback in that the resource allocation is limited in position.

The number of blind demodulating attempts is 8 for a single resource allocation, 4 for two resource allocations, 2 for four resource allocations, and 1 for eight resource allocations. Since there can be null resource for receiving 4 resources with the interleaver according to an embodiment, it is necessary to perform the blind demodulating with higher degree of freedom. However, since the degree of freedom increases the reception complexity of the user terminal, additional decoding attempts are permitted for only the 2 and 4 decodings as denoted by reference numbers 911 and 913. Reference number 911 denotes the case where one unnecessary resource is used from the viewpoint of the first resource in consideration of the additional case where two unnecessary resources are used, and reference number 913 denotes the case where two unnecessary resources are added per two resources by connecting two resources. Although the number of blind decoding attempts increases 1.6 times as compared to the conventional blind decoding, the user terminal can receive signals without information on the resource allocated for relays and even when the relay control channels are multiplexed.

The structure of the ICIC PDCCH described hereinafter can be applied to the PDCCH-A control channel, and the PDCCH-A control channel includes the ICIC PDCCH and the R-PDCCH.

FIG. 10 is a diagram illustrating configurations of a subframe for transmitting E-PDCCH (ICIC PDCCH or R-PDCCH) using the fixed resource of the subframe in the control channel configuration method according to a second embodiment of the present invention. The control signals transmitted to the conventional user terminal are transmitted in the first to third symbols, and the E-PDCCH cannot be mapped to the same symbols. Accordingly, the E-PDCCH must be mapped in the data region for the conventional PDSCH. In this embodiment, a description is provided on how to map the E-PDCCHs in the data region.

In the second embodiment of the present invention, a description is made of the structure of the subframe transmitted with the rel.10 (LTE-A) DRS which is for demodulation of the ICIC PDCCH and for ICIC PDCCH-based channel estimation. In the second embodiment of the present invention, the resources allocated for the ICIC occupies the symbols fixedly determined according to the structure of the subframe and this is for improving the reception performance by transmitting the rel.10-dedicated reference signals (DRS) while maintaining the same coding rate between the subframe structures. In this embodiment, the number of REs allocated for the ICIC PDCCH is a total of 20 per RB, and one CCE consists of two RBs. Accordingly, one CCE is composed of 10 REGs or 40 REs.

Reference numbers 1001, 1005, 1007, and 1009 denote fixed resource allocation regions of E-PDCCH in the normal CP subframe structure as provided in an embodiment of the present invention. The part 1001 of FIG. 10 shows the normal CP subframe structure with rel.8 Common Reference Signals (CRS). The part 1005 of FIG. 10 shows the normal CP subframe structure with rel.8 CRS and rel.10 Dedicated Reference Signal (DRS). As shown in FIG. 10, E-PDCCH is transmitted in the 5th to 7th symbols. In this case, 20 REs are allocated and E-PDCCH uses Rel.10 such that, in order to demodulate the E-PDCCH, it is necessary to receive some of rel.10 DRSs for demodulating the reference signal transmitted in the first slot.

The parts 1007 and 1009 of FIG. 10 show the Time Division Duplexing (TDD) subframe structures with Downlink Pilot Time Symbol (DwPTS). As aforementioned, the E-PDCCH can be transmitted in the 3rd to 5th symbols, and this is because the PDCCH is transmitted in the first two symbols of the DwPTS.

Reference numbers 1011, 1013, 1015, and 1017 denote fixed resource allocation regions of E-PDCCH in the extended CP subframe structure. In the extended CP subframe structure, resource allocation is performed in the same manner as in the normal CP subframe structure. Table 1 shows the locations of the symbols in which E-PDCCH is transmitted. This can be used when the ICIC PDCCH and the data channel in the corresponding region are transmitted using DRS.

### Table 1

### [Table 1]

**[Table]**

| Fixed Symbol Locations of E-PDCCH According to First Embodiment | | |
|---|---|---|
| | FFD, TTD (Normal SF) | TDD (DwPTS) |
| Normal CP | 5, 6, 7 | 3, 4, 5 |
| Extended CP | 4, 5, 6 | 4, 5, 6 |

Table 1 shows the fixed symbol locations when the first symbol is configured as the initial symbol in the symbol ordering process.

In the case of using only CRS, the transmission can be performed with the fixed locations listed in Table 1, and this is for performing transmission at the same locations as in the structure using DRS.

FIG. 11 is a diagram illustrating configurations of a subframe having an additional E-PDCCH in the 2nd slot while using CRS and DRS in the structures of the second embodiment of FIG. 10. The additional resource is allocated for transmitting uplink scheduling information of the control channel, and the downlink scheduling information is transmitted in the 1st slot. That is, the downlink scheduling information is transmitted in the 1st slot, and the uplink scheduling information is transmitted in the 2nd slot. However, when it is necessary to transmit only the uplink scheduling information to the user terminal or the relay, the uplink scheduling information can be transmitted in one of the 1st slot and the 2nd slot.

In an embodiment of the present invention, the downlink scheduling information is transmitted in the 5th, 6th, and 7th symbols of the 1st slot, and the uplink scheduling information is transmitted in the 1st, 2nd, and 3rd symbols of the 2nd slot. This rule is applied to the normal CP and Extended CP cases with the same structure so as to maintain the transmission rate. According to this rule, the number of symbols allocated for the control channel is 3 in both the 1st and 2nd slots, and also the structures of the control channels are similar to each other, such that it is possible to improve the transmission efficiency.

Referring to FIG. 11, reference numbers 1101, 1104, 1105, and 1106 denote the normal CP frame structure with CRS, normal frame structure with DRS, extended CP frame structure with CRS, and extended CP frame structure with DRS, respectively; and the control channel 1112 is mapped to the same regions 1102 and 1103 in all of the cases using CRS and DRS.

FIG. 12 is a diagram illustrating configurations of a subframe for transmitting the E-PDCCH using the fixed resource of the subframe in the control channel configuration method according to a third embodiment of the present invention.

In the third embodiment of the present invention, a description is made of the structure of the subframe transmitted with rel.10 (LTE-A) DRS and rel.8 CRS for demodulation of the E-PDCCH for ICIC and channel estimation. In the third embodiment of the present invention, the resource for ICIC occupies fixed symbol regions determined according to the structure of the subframe, and this is for improving the reception performance by transmitting with the rel.8 CRS while maintaining the same coding rate between the subframe structures. By allocating the resource right after the rel.8 PDCCH, it is possible to minimize the reception delay of the E-PDCCH. In the third embodiment of the present invention, the demodulation of the PDSCH transmitted in the RB in which the E-PDCCH is transmitted and channel estimation are performed using rel.10 DRS. That is, in the third embodiment of the present invention, the E-PDCCH (i.e. control channel) demodulation and channel estimation is performed with CRS, and the PDSCH (i.e. data channel) demodulation and channel estimation is performed with DRS. In this embodiment, the number of REs allocated for the E-PDCCH is 20, and one CCE consists of two RBs. Accordingly, one CCE is composed of 10 REGs or 40 REs. Reference numbers 1201, 1203, 1205, and 1207 denote the normal CP subframe structures with fixed resource allocation regions of E-PDCCH. The part 1201 of FIG. 12 shows a normal CP subframe structure with rel.8 CRS, and the part 1203 of FIG. 12 shows a normal CP subframe structure with rel.8 CRS and rel.10 DRS. In this embodiment, the E-PDCCH is transmitted in the 4th and 5th symbols, and this is for transmitting the E-PDCCH from the first symbol right after a maximum number of OFDM symbols for transmission of the PDCCH at the same time with the use of 20 REs. In this case, the reception performance is improved with CRS but does not vary with DRS. The parts 1205 and 1207 of FIG. 12 shows normal subframe structures with DwPTS. As aforementioned, the E-PDCCH is transmitted in the 3rd and 4th or 3rd to 5th symbols, and this is because the PDCCH is transmitted in the first two symbols with DwPTS. Reference numbers 1209, 1211, 1213, and 1215 denote the extended CP subframe structures with fixed resource allocation regions of the E-PDCCH. The resource is allocated according to the same rule as the normal CP subframe structures. Table 2 shows the locations of the symbols in which E-PDCCH is transmitted. This can be used in the case where the E-PDCCH is demodulated using CRS and the data channel in the corresponding region is transmitted with DRS.

### Table 2

[Table 2]

**[Table]**

| Fixed Symbol Locations of E-PDCCH According to Second Embodiment | | |
|---|---|---|
| | FFD, TTD (Normal SF) | TDD (DwPTS) |
| Normal CP | 4,5 | 3,4,5 |
| Extended CP | 4,5,6 | 3,4 |

Table 2 shows the fixed symbol locations when the first symbol is configured as the initial symbol in the symbol ordering process.

In the third embodiment of the present invention, the fixed symbol locations of CRS can be applied in the subframe using DRS in the same manner as the first embodiment. In this case, the symbol locations follow Table 2.

FIG. 13 is a diagram illustrating a configuration of a subframe having an additional E-PDCCH resource region in the 2nd slot with CRS and DRS in the structures of the third embodiment of FIG. 12. The addition resource is allocated for transmitting uplink scheduling information of control channel, and the downlink scheduling information is transmitted in the 1st slot. However, when it is needed to transmit only the uplink scheduling information to the user terminal or the relay, the uplink scheduling information can be transmitted in one of the 1st slot and the 2nd slot. In an embodiment of the present invention, the downlink scheduling information is transmitted in the 5th and 6th symbols of the 1st slot, and the uplink scheduling information is transmitted in the 1st and 2nd symbols of the 2nd slot. In this manner, the normal CP subframe and the extended CP subframe are configured in the same structure so as to maintain the transmission rate identically. According to this rule, the number of symbols for transmitting the control channel is 2 in both the 1st and 2nd slots. Since the structures of the control channels are similar to each other, the transmission efficiency can be improved.

Referring to FIG. 13, reference numbers 1301, 1304, 1305, and 1306 denote the normal CP frame structure with CRS, normal frame structure with DRS, extended CP frame structure with CRS, and extended CP frame structure with DRS, respectively; and the control channels 1312 are mapped to the same regions 1302 and 1303 in all of the cases using CRS and DRS.

FIG. 14 is a diagram illustrating a principle of E-PDCCH resource mapping in the control channel configuration method according to an embodiment of the present invention.

The PDCCH, i.e. conventional control channel, is mapped using a time-domain preferred allocation scheme as denoted by reference number 1413. In more detail, the conventional control channel is allocated resources in units of 4 contiguous Resource Elements (REs) (6 REs when including RSs), i.e. in units of REGs, for the same symbol. For example, if two OFDM symbols occupy the control region as shown in the 1411 of FIG. 14, the PDCCH is first mapped to the four contiguous resource elements of the first symbol and then the four contiguous resource elements of the second symbol. That is, the time domain-preferred allocation scheme is a method in which the first four contiguous resource elements are allocated for the first two symbols in the time domain and then the next four contiguous resource elements are allocated for the first two symbols across the entire bandwidth. Since the resource allocation is performed across the entire bandwidth in the domain-preferred allocation scheme, the PDCCH is mapped to the RBs from the lowest RB index 1414 to the highest RB index 1415.

Meanwhile, the PDSCH, i.e. the data channel, is mapped using a frequency domain-preferred allocation scheme. As denoted by reference number 1416, the PDSCH is mapped to the contiguous RBs from the first symbol in the frequency domain. After the resource mapping for the current RB resource has finished, the resource mapping is repeated from the first symbol of the next RB 1418. Once the resource mapping has been completed for the entire RB allocated for a specific user for the same symbol, the PDSCH is continuously allocated to the RB of the next symbol. In the part 1411 of FIG. 14, since the E-PDCCH is multiplexed in the PDSCH region, if the E-PDCCH is transmitted in the RB for transmitting the PDSCH, the corresponding symbol is skipped and then the frequency domain-preferred allocation is restarted from the second slot. The PDSCH is allocated to the resources in units of REs.

The mapping process progresses, skipping the reference signals. Since the E-PDCCH is transmitted in the PDSCH data region even though it is a control channel, the mapping process can be performed in two methods as denoted by reference number 1421 of the part 1411 and reference number 1435 of the part 1425.

Reference number 1421 denotes the time domain-preferred allocation scheme. After completing the resource allocation in the previous RB 1423 for the ICIC transmission, the resource allocation can continue in the next RB 1424. That is, the resource allocation is performed in units of RBs such that when the resource allocation is completed in one RB, the resource of the next RB can be allocated. In the case of the time domain-preferred allocation scheme, the resource can be allocated in units of symbols for the PDSCH or in units of four symbols, i.e. REGs, as for the conventional PDCCH. In the case of the time domain-preferred allocation scheme as denoted by reference number 1421, when it is impossible to allocate the resource by the REGs composed of 4 contiguous resource elements in the same symbol, the REG is formed along with the resource elements of the next symbol.

Reference number 1425 denotes the frequency domain-preferred allocation scheme. In the case of the frequency domain-preferred allocation scheme, the PDSCH is mapped to the resource across the all of the RBs allocated in one symbol and then the resource across the RBs in the next symbol. However, when the CCE using the same method as the PDSCH consists of a number of REs less than 12, the E-PDCCH is transmitted across more than 2 RBs. In this case, one RB is received by multiple user terminals, and this means that it is difficult to use the ICIC in which the transmission power is determined in units of RBs.

In order to address this problem, a "per-RB frequency domain-preferred allocation" is performed. Although the resource allocation is performed for the resource of the first symbol in the first RB allocated for the E-PDCCH according to the frequency domain-preferred allocation, the resource mapping continues from the next symbol in the same RB rather than from the resource in the next RB as denoted by reference number 1435. In this manner, once the resource allocation is completed in one RB, the mapping continues from the first symbol of the next RB. In this method, the resource allocation is performed in a time domain-preferred allocation manner in the RB, but it is not guaranteed to perform the time domain-preferred allocation across RBs.

FIG. 15 is a diagram illustrating configurations of slots of a subframe for supporting the time-domain allocation scheme in the control channel configuration method according to an embodiment of the present invention.

E-PDCCH can be mapped in the first and second slots of the subframe, but the first slot is for the downlink resource allocation information and the second slot is for the uplink resource allocation information. Also, the resource regions of the 1st slot and the resource regions of the 2nd slot are interleaved independently such that the REG mapping orders are also distinctive.

FIG. 15 shows the arrangements of the REGs in the 1st and 2nd slots of the normal CP subframe structure with CRS and DRS according to the time domain-preferred allocation method. The individual slot configurations depicted in FIG. 15 can be used in a subframe.

Reference numbers 1510, 1511, and 1512 denote REG mappings and resource arrangements in the 1st slot using DRS. The part 1510 of FIG. 15 shows a method for forming an REG with the REs across two contiguous symbols when it is impossible to form the REG with 4 contiguous REs in the same symbol, in case of applying the rel.8 REG configuration rule.

Referring to the part 1510 of FIG. 15, unlike other REGs defined in the same symbol, the REG 7 is formed in the form of a square with the REs belonging to two contiguous symbols since there are not enough contiguous REs to form the REG in the same symbol.

The part 1511 of FIG. 15 shows a method for forming an REG with the REs across two contiguous symbols having DRSs. When there are no DRSs in the two contiguous symbols, the normal REG configuration method is used. In the case where there are DRSs in the two contiguous symbols, the REs of the two contiguous symbols are combined to form an REG in the form of a square as shown in the part 1511 of FIG. 15.

The part 1512 of FIG. 15 shows the frequency symmetric configuration, and the method for forming an REG is identical with that of the part 1511.

The part 1514 of FIG. 15 shows the configuration of the 2nd slot configured according to the method as described with the part 1510. The part 1515 of FIG. 15 shows the configuration of the 2nd slot configured according to the method as described with the part 1511. The part 1516 of FIG. 15 shows the configuration of the 2nd slot configured according to the method as described with part 1512.

The part 1517 of FIG. 15 shows a method for forming an REG with the REs across two contiguous symbols having CRSs. When there are CRSs in the two contiguous symbols, the normal REG configuration method is used. In the case where there are no CRSs in the two contiguous symbols, the REs of the two contiguous symbols are combined to form a REG in the form of a square.

The part 1518 of FIG. 15 shows a method for forming the REGs with the REs across two contiguous symbols in the form of squares.

The part 1519 of FIG. 15 shows the configuration of the 1st slot configured according to the conventional REG configuration method in the subframe carrying CRSs. The part 1520 of FIG. 15 shows a method for configuring the REG with the REs across two contiguous symbols having no CRSs in the subframe carrying CRSs. The part 1522 of FIG. 15 shows the configuration of the 2nd slot configured according to the conventional REG configuration method in the subframe carrying CRSs. The part 1523 of FIG. 15 shows the configuration of the 2nd slot in which the REGs are formed with the REs across two contiguous symbols having no CRSs, in the subframe carrying CRSs.

The part 1524 of FIG. 15 shows a configuration of the 2nd slot in which the REGs are formed with the REGs across two contiguous symbols having no CRSs in the subframe carrying CRSs except for the last two symbols in which the REGs are formed according to the conventional method. This is for improving resource efficiency in consideration of the case where the last one or two symbols may not be used according to the radius of the cell.

FIG. 16 is a diagram illustrating configurations of the first slot of the extended CP subframe structure in the control channel configuration method according to an embodiment of the present invention.

The part 1602 of FIG. 16 shows the configuration of the 1st slot according to the method used for the configuration depicted in the part 1510 of FIG. 15.

The part 1603 of FIG. 16 shows the configuration of the 1st slot according to the method used for the configuration depicted in the part 1511 of FIG. 15.

The part 1604 of FIG. 16 shows the configuration of the 1st slot according to the method used for the configuration depicted in the part 1512 of FIG. 15.

The part 1605 of FIG. 16 shows the configuration of the 1st slot according to the method used for the configuration depicted in the part 1601.

The part 1606 of FIG. 16 shows the configuration of the 1st slot according to the method used for the configuration depicted in the part 1602.

The part 1607 of FIG. 16 shows the configuration of the 1st slot according to the method used for the configuration depicted in the part 1518 of FIG. 15.

The part 1608 of FIG. 16 shows the configuration of the 1st slot according to the method used for the configuration depicted in the part 1520 of FIG. 15.

The part 1609 of FIG. 16 shows the configuration of the 1st slot according to the method used for the configuration depicted in the part 1521 of FIG. 15.

The part 1610 of FIG. 16 shows the configuration of the 1st slot according to the method used for the configuration depicted in the part 1522 of FIG. 15.

The part 1611 of FIG. 16 shows the configuration of the 1st slot according to the method used for the configuration depicted in the part 1524 of FIG. 15.

The part 1612 shows of FIG. 16 the configuration of the 1st slot according to the method used for the configuration depicted in the part 1523 of FIG. 15.

FIG. 17 is a diagram illustrating configurations of slots of a normal CP subframe structure in the control channel configuration method according to an embodiment of the present invention. The slot configurations denoted by reference numbers 17xx of FIG. 17 are configured according to the same rules as described with the slot configurations denoted by reference numbers 15xx of FIG. 15, except that the resource mapping is performed in a frequency domain-preferred allocation scheme rather than a time domain-preferred allocation scheme.

FIG. 18 is a diagram illustrating configurations of the slots of the normal CP subframe structure in the control channel configuration method according to an embodiment of the present invention.

The slot configurations denoted by reference numbers 18xx of FIG. 18 are configured according to the same rules as described with the slot configurations denoted by reference numbers 16xx of FIG. 16, except that the resource mapping is performed in order of a frequency domain-preferred allocation scheme and a time domain-preferred allocation scheme.

FIG. 19 is a flowchart illustrating a method for transmitting control channels according to an embodiment of the present invention.

Referring to FIG. 19, the base station determines RB resources to be used for transmitting a relay control channel destined to a relay and maps the relay control channel in the data channel region of the RB in step 1901. Next, the base station determines an REG interleaving mode depending on the channel characteristic of the relay and the reference signal mode for use in channel estimation and configures a control channel structure based on the REG interleaving mode and reference signal mode in step 1902. Next, the base station multiplexes control channels based on the interleaving mode appropriated for each control channel and the reference signal in step 1903. Next, the base station maps the multiplexed control channels to the REGs in ascending order of indices of RBs that are determined to be used for transmission in units of RBs in the time domain-preferred or the frequency domain-preferred allocation manner in step 1904. Once one RB is allocated completely, the next RB is allocated in step 1905. After all of the REGs are allocated completely, the base station transmits the control channel in step 1906.

FIG. 20 is a flowchart illustrating a method for receiving control channels according to an embodiment of the present invention.

Referring to FIG. 20, a relay receives the information on the RB resource region to be used for relay control channel and whether to apply interleaving and reference signal used currently transmitted by means of higher layer signaling of the base station in step 2001. Next, the relay performs demapping on the REGs in ascending order of indices of the RBs in the time domain or frequency domain-preferred allocation manner in step 2002. Once all of the REGs are demapped in one RB, the relay continues demapping the REG in the next RB in step 2003. Finally, the relay performs deinterleaving on the received REGs according to the interleaving mode or control channel decoding directly in step 2004.

FIG. 21 is a flowchart illustrating a method for transmitting control channels according to another embodiment of the present invention.

Referring to FIG. 21, the base station determines the RB resources to be used for ICIC and notifies the rel.10 (LTE-A) terminal of the RB resources in step 2101. Next, the base station selects the terminal to which the ICIC is applied in step 2103. Next, the base station configures PCFICH for the PDCCH to be transmitted to LTE terminal or LTE-A system of which the ICIC function is disabled in step 2105. Next, the base station configures PDCCHs to be transmitted to the LTE terminal and ICIC-disabled LTE-A terminal in step 2107. Next, the base station configures PDCCH-A to be transmitted to the ICIC-enabled LTE-A terminal in step 2109. In the case where the configured resource is overlapped with the resource allocated for R-PDCCH, the PDCCH-A and R-PDCCH are multiplexed. After configuring the PDCCH-A, the base station multiplexes the PDCCH, PCFICH, and PHICH for the LTE terminals and ICIC-disabled LTE-A terminals in step 2111. Next, the base station configures PDSCHs (for LTE and LTE-A terminals and relays) based on the PDCCH scheduling information, PDCCH-A scheduling information, and R-PDCCH scheduling information in step 2113. Finally, the base station multiplexes all of the control channels and data channels and transmits the multiplexed control and data channels in step 2115. FIG. 22 is a flowchart illustrating a method for receiving control channels according to another embodiment of the present invention.

Referring to FIG. 22, a rel.10 terminal is notified of the RBs to be used for ICIC from a base station by means of higher layer signaling in step 2201. Next, terminal receives the PCFICH in step 2203 and attempts to receive the PDCCH based on the information contained in the PCFICH in step 2205. If it fails to receive the PDCCH channel, the terminal attempts to receive the PDCCH-A in the PDCCH-A resource region in step 2207. The terminal which is supposed to use the ICIC by means of higher layer signaling can attempt to receive the PDCCH-A without attempting to receive the PDCCH at step 2205.

The terminal transfers all available resource for the PDCCH-A to the demodulator at step 2207 and performs deinterleaving on the PDCCH-A resource in units of basic resource allocation in step 2209. Next, the terminal performs PDCCH-A demodulation on the deinterleaved resource according to the blind demodulation method described in FIG. 9 in step 2211. If the PDCCH-A is successfully demodulated, the terminal receives the scheduling information of the corresponding control channel and demodulates the data channel based on the scheduling information in step 2213.

FIG. 23 is a block diagram illustrating a configuration of a base station according to an embodiment of the present invention.

Referring to FIG. 23, the base station includes a controller 2309 which is responsible for scheduling for transmitting the current subframe.

In more detail, the controller 2309 determines the Resource Block (RB) to be used to transmit control channels and configures the control channel by mapping the control channel to a region in the RB. In this case, the controller 2309 configures the control channel in units of Resource Element Groups (REGs) which consists of one or more Resource Elements (REs). Here, the REGs can be controlled to be allocated in the time domain-preferred or frequency domain-preferred allocation manner. In this case, the control channel can include at least one of a relay control channel and an inter-cell interference coordination control channel, and the resource group is the resource structured in time and frequency. The resource element group is defined in a resource block and consists of contiguous resource elements excluding ones allocated for reference signals.

When configuring the control channel, the controller 2309 controls such that the control channel is configured in one resource block and then in the next after completion in the previous resource block.

In case that the resource element group cannot be formed in one symbol, the controller 2309 controls such that the resource element group is formed with the contiguous resource elements across two symbols.

The controller 2309 determines contiguous or discontiguous resource groups as the resource block to be used for configuring the control channel.

The channel generated by the PCFICH generator 2301 and the channel generated by the PDCCH generator 2305 which generates control channels for the ICIC-disabled rel.10 terminal and conventional rel.8 terminal is multiplexed with the channel generated by the PHICH generator 2303 for transmitting ACK/NACK, the REG/CCE generator 2307 configures a control channel, and the PDCCH-A generator 2317 configures the control channel for ICIC transmission with the control channels. In the case where there is the control channel destined to the relay, the relay control channel generated by the R-PDCCH generator 2319 is interleaved with the data channel generated by the PDSCH generator 2321 by means of the interleaver 2315 and multiplexed by the frequency division multiplexer 2323. The multiplexed channels are multiplexed with the conventional rel.8 control channels by means of the time division multiplexer 2313 and mapped to the transmission resource along with the reference signals, which is generated by the reference signal generator 2325, by means of the resource element mapper 2327.

FIG. 24 is a block diagram illustrating a configuration of a user terminal according to an embodiment of the present invention.

Referring to FIG. 24, the signal received by the receiver 2401 is demapped by means of the resource element demapper 2403 such that the reference signals are transferred to the channel estimator 2407 via the reference signal receiver 2405 to be used for channel demodulation and the remaining data are demultiplexed into rel.8 control channel signal 2409 and data channel signal 2417 by means of the time division demultiplexer 2415. The rel.8 control signal is used to receive the ACK/NACK information with the information received through the PCFICH receiver 2433 and the scheduling information with the information received through the PDCCH receiver 2413. The data channel signal 2417 is demultiplexed by the frequency division demultiplexer 2419 such that the control channels and data channels are received through the PDSCH receiver 2421, R-PDCCH receiver 2423, and PDCCH-A receiver 2425. The relay control channel is received by means of the R-PDSCH receiver 2427 based on the R-PDCCH receiver information, and the data channel used for ICIC is received by means of the PDSCH-A receiver 2429 based on the PDCCH-A receiver information. The reason why the relay control channel is depicted with the receiver of the user terminal is because the relay is recognized as a user terminal located within the cell in view of the base station.

As described above, the control channel configuration method and apparatus for supporting ICIC in an OFDM-based system according to the present invention allows the receiver to receive the ICIC control channel by frequency division multiplexing the data destined to the terminal which can receive the control channel with the data channels and allocated resource multiplexing with the control channel transmitted to the relay, resulting in minimization of resource waste. Also, the control channel configuration method and apparatus for supporting ICIC in an OFDM-based system according to the present invention is capable of reducing scheduling delay of the control channel for ICIC and being applied to the case where relay control channel coexists with the ICIC control channel.

Although embodiments of the present invention have been described in detail hereinabove, it should be clearly understood that many variations and/or modifications of the basic inventive concepts herein taught which may appear to those skilled in the present art will still fall within the scope of the present invention, as defined in the appended claims.

## Claims

1. A method for configuring a control channel by a base station for inter-cell interference coordination, ICIC, in an orthogonal frequency division multiple access, OFDMA, system, comprising:
determining (1901) a resource block, RB, to be used for configuring control channels;
configuring (1902) the control channels by mapping the control channels in a data channel region within the RB; and
transmitting (1906) the configured control channels, wherein configuring (1902) the control channels comprises mapping (1904) the control channels in units of resource element groups, REGs, the REGs being formed by binding four contiguous resource elements, REs, excluding REs mapped to reference signals, RSs, in the data channel region within the same RB;
wherein configuring (1902) the control channels comprises after mapping all REGs in one RB, continuing the control channel mapping in a next RB in a time-domain preferred manner, and
wherein an REG is formed only with REs in one symbol when a demodulation reference signal, DRS, does not exist within the one symbol, and the REG is formed by binding contiguous REs across two symbols to form a square when the DRS exists within the two symbols.

2. The method of claim 1, wherein the control channels comprise at least one of relay control channels and inter-cell interference coordination, ICIC, control channels.

3. The method of claim 1, wherein the REG is defined by time and frequency.

4. The method of claim 1, wherein determining (1901) the RB comprises selecting contiguous or discontiguous resource element groups to be used for configuring the control channels.

5. The method of claim 1, wherein the REG is defined in one RB and includes contiguous REs excluding REs assigned for common reference signals, CRS.

6. A base station for configuring a control channel for inter-cell interference coordination, ICIC, in an orthogonal frequency division multiple access, OFDMA, system, comprising:
a transceiver arranged to transmit and receive a signal; and
a controller (2309) arranged to determine (1901) a Resource Block, RB, to be used for configuring control channels, configure (1902) the control channels by mapping (1904) the control channels in a data channel region within the RB, and transmit (1906) the configured control channels;
wherein the controller (2309) is further configured to map (1904) the control channels in units of Resource Element Groups, REGs, the REGs being formed by binding four contiguous Resource Elements, REs, excluding REs mapped to reference signals, RSs, in the data channel region within the same RB; and
wherein configuring (1902) the control channels comprises after mapping all REGs in one RB, continuing the control channel mapping in a next RB in a time-domain preferred manner, and
wherein an REG is formed only with REs in one symbol when a demodulation reference signal, DRS, does not exist within the one symbol, and the REG is formed by binding contiguous REs across two symbols to form a square when the DRS exists within the two symbols.

7. The base station of claim 6, wherein the controller (2309) is further arranged to form, when the REG is not formed only with the REs in one symbol, the REG by binding contiguous REs across two symbols.

8. The base station of claim 6, wherein the control channels comprise at least one of relay control channels and inter-cell interference coordination, ICIC, control channels.

9. The base station of claim 6, wherein the REG is defined by time and frequency.

10. The base station of claim 6, wherein the controller (2309) is further arranged to select contiguous or discontiguous resource element groups to be used for configuring the control channels.

11. The base station of claim 6, wherein the REG is defined in one RB and includes contiguous REs excluding REs assigned for common reference signals, CRS.

## Patentansprüche

1. Verfahren zur Konfiguration eines Steuerkanals durch eine Basisstation für eine Inter-Cell Interference Coordination, ICIC, in einem orthogonalen Frequenzmultiplex-Mehrfachzugriffs-System, OFDMA, umfassend:
Bestimmen (1901) eines Ressourcenblocks, RB, zur Verwendung zur Konfiguration von Steuerkanälen;
Konfigurieren (1902) der Steuerkanäle durch Abbilden der Steuerkanäle in einen Datenkanalbereich in dem RB;
Übermitteln (1906) der konfigurierten Steuerkanäle;
wobei das Konfigurieren (1902) der Steuerkanäle das Abbilden (1904) der Steuerkanäle in Einheiten von Ressourcenelementgruppen, REG, umfasst, wobei die REG durch Bindung von vier zusammenhängenden Ressourcenelementen, RE, ausschließlich RE, die auf Referenzsignale, RS, abgebildet sind, in dem Datenkanalbereich in dem gleichen RB gebildet werden;
wobei das Konfigurieren (1902) der Steuerkanäle nach dem Abbilden aller REG in einen RB das Fortführen der Steuerkanalabbildung in einen nächsten RB auf bevorzugte Zeitbereichsart umfasst; und
wobei eine REG nur mit RE in einem Symbol gebildet wird, wenn ein Demodulationsreferenzsignal, DRS, nicht in dem einen Symbol existiert, und wobei die REG gebildet wird durch Bindung zusammenhängender RE über zwei Symbole, um ein Rechteck zu bilden, wenn das DRS in den beiden Symbolen existiert.

2. Verfahren nach Anspruch 1, wobei die Steuerkanäle mindestens eines der folgenden umfassen: Relay-Steuerkanäle und/oder Inter-Cell Interference Coordination-, ICIC, Steuerkanäle.

3. Verfahren nach Anspruch 1, wobei die REG durch Zeit und Frequenz definiert ist.

4. Verfahren nach Anspruch 1, wobei das Bestimmen (1901) des RB das Auswählen zusammenhängender oder nicht zusammenhängender Ressourcenelementgruppen zur Verwendung zur Konfiguration der Steuerkanäle umfasst.

5. Verfahren nach Anspruch 1, wobei die REG in einem RB definiert ist und zusammenhängende RE umfasst, ausschließlich RE, die für gemeinsame Referenzsignale, CRS, zugeordnet sind.

6. Basisstation zur Konfiguration eines Steuerkanals für eine Inter-Cell Interference Coordination, ICIC, in einem orthogonalen Frequenzmultiplex-Mehrfachzugriffs-System, OFDMA, umfassend:
einen Transceiver, der zum Senden und Empfangen eines Signals angeordnet ist; und
eine Steuereinheit (2309), die für folgende Zwecke angeordnet ist: Bestimmen (1901) eines Ressourcenblocks, RB, zur Verwendung zur Konfiguration von Steuerkanälen; Konfigurieren (1902) der Steuerkanäle durch Abbilden (1904) der Steuerkanäle in einen Datenkanalbereich in dem RB; Übermitteln (1906) der konfigurierten Steuerkanäle;
wobei die Steuereinheit (2309) ferner gestaltet ist zum Abbilden (1904) der Steuerkanäle in Einheiten von Ressourcenelementgruppen, REG, umfasst, wobei die REG durch Bindung von vier zusammenhängenden Ressourcenelementen, RE, ausschließlich RE, die auf Referenzsignale, RS, abgebildet sind, in dem Datenkanalbereich in dem gleichen RB gebildet werden;
wobei das Konfigurieren (1902) der Steuerkanäle nach dem Abbilden aller REG in einen RB das Fortführen der Steuerkanalabbildung in einen nächsten RB auf bevorzugte Zeitbereichsart umfasst; und
wobei eine REG nur mit RE in einem Symbol gebildet wird, wenn ein Demodulationsreferenzsignal, DRS, nicht in dem einen Symbol existiert, und wobei die REG gebildet wird durch Bindung zusammenhängender RE über zwei Symbole, um ein Rechteck zu bilden, wenn das DRS in den beiden Symbolen existiert.

7. Basisstation nach Anspruch 6, wobei die Steuereinheit (2309) ferner so angeordnet ist, dass sie, wenn die REG nicht nur mit RE in einem Symbol wird, die REG durch Bindung zusammenhängender RE über zwei Symbole bildet.

8. Basisstation nach Anspruch 6, wobei die Steuerkanäle mindestens eines der folgenden umfassen: Relay-Steuerkanäle und/oder Inter-Cell Interference Coordination-, ICIC, Steuerkanäle.

9. Basisstation nach Anspruch 6, wobei die REG durch Zeit und Frequenz definiert ist.

10. Basisstation nach Anspruch 6, wobei die Steuereinheit (2309) ferner so angeordnet ist, dass sie zusammenhängende oder nicht zusammenhängende Ressourcenelementgruppen zur Verwendung zur Konfiguration der Steuerkanäle auswählt.

11. Basisstation nach Anspruch 6, wobei die REG in einem RB definiert ist und zusammenhängende RE umfasst, ausschließlich RE, die für gemeinsame Referenzsignale, CRS, zugeordnet sind.

## Revendications

1. Procédé de configuration d'un canal de commande par une station de base pour la coordination des interférences intercellulaires, ICIC, dans un système d'accès multiple par répartition en fréquence orthogonale, OFDMA, comprenant les étapes :
détermination (1901) d'un bloc de ressources, RB, à utiliser pour la configuration des canaux de commande ;
configuration (1902) des canaux de commande en mettant en correspondance les canaux de commande dans une région de canaux de données au sein du RB ; et
transmission (1906) des canaux de commande conçus,
la configuration (1902) des canaux de commande comprenant la mise en correspondance (1904) des canaux de commande en unités de groupes d'éléments de ressources, REG, les REG étant formés en liant quatre éléments de ressources contigus, RE, à l'exclusion des RE mis en correspondance avec des signaux de référence, RS, dans la région du canal de données au sein du même RB ;
la configuration (1902) des canaux de commande comprenant, après la mise en correspondance de tous les REG dans un RB, la poursuite de la mise en correspondance des canaux de commande dans un RB suivant, de préférence dans le domaine temporel, et
un REG étant formé uniquement avec des RE dans un symbole lorsqu'un signal de référence de démodulation, DRS, n'existe pas dans ce symbole, et le REG étant formé en liant des RE contigus entre deux symboles pour former un carré lorsque le DRS existe dans les deux symboles.

2. Procédé selon la revendication 1, les canaux de commande comprenant des canaux de commande de relais et/ou des canaux de commande de coordination des interférences intercellulaires, ICIC.

3. Procédé selon la revendication 1, le REG étant défini par le temps et la fréquence.

4. Procédé selon la revendication 1, la détermination (1901) du RB comprenant la sélection de groupes d'éléments de ressources contigus ou non contigus à utiliser pour configurer les canaux de commande.

5. Procédé selon la revendication 1, le REG étant défini dans un RB et comprenant les RE contigus à l'exclusion des RE attribués pour les signaux de référence communs, CRS.

6. Station de base pour configurer un canal de commande pour la coordination des interférences intercellulaires, ICIC, dans un système d'accès multiple par répartition en fréquence orthogonale, OFDMA, comprenant :
un émetteur conçu pour émettre et recevoir un signal ; et
un dispositif de commande (2309) conçu pour déterminer (1901) un bloc de ressources, RB, à utiliser pour configurer les canaux de commande, configurer (1902) les canaux de commande en mettant en correspondance (1904) les canaux de commande dans une région de canaux de données au sein du RB, et transmettre (1906) les canaux de commande conçus ;
le dispositif de commande (2309) étant en outre conçu pour mettre en correspondance (1904) les canaux de commande en unités de groupes d'éléments de ressources, REG, les REG étant formés en liant quatre éléments de ressources contigus, RE, à l'exclusion des RE mis en correspondance en signaux de référence, RS, dans la région du canal de données à l'intérieur du même RB ; et
la configuration (1902) des canaux de commande comprenant, après la mise en correspondance de tous les REG dans un RB, la poursuite de la mise en correspondance des canaux de commande dans un RB suivant, de préférence dans le domaine temporel, et
un REG étant formé uniquement avec des RE dans un symbole lorsqu'un signal de référence de démodulation, DRS, n'existe pas dans ce symbole, et le REG étant formé en liant des RE contigus entre deux symboles pour former un carré lorsque le DRS existe dans les deux symboles.

7. Station de base selon la revendication 6, le dispositif de commande (2309) étant en outre conçu pour former, lorsque le REG n'est pas formé uniquement avec les RE dans un symbole, le REG en liant des RE contigus entre deux symboles.

8. Station de base selon la revendication 6, les canaux de commande comprenant des canaux de commande de relais et/ou des canaux de commande de coordination des interférences intercellulaires, ICIC.

9. Station de base selon la revendication 6, le REG étant défini par le temps et la fréquence.

10. Station de base selon la revendication 6, le dispositif de commande (2309) étant en outre conçu pour sélectionner des groupes d'éléments de ressources contigus ou non contigus à utiliser pour configurer les canaux de commande.

11. Station de base selon la revendication 6, le REG étant défini dans un RB et comprenant des RE contigus à l'exclusion des RE attribués pour les signaux de référence communs, CRS.
